# EUROPÄISCHE PATENTSCHRIFT

(11) **EP 4 042 000 B1**
(45) Veröffentlichungstag und Bekanntmachung des Hinweises auf die Patenterteilung: **06.09.2023**
(21) Anmeldenummer: 20786258.2
(22) Anmeldetag: 30.09.2020
(51) Int. Cl.: F01N 3/22, F01N 3/32

(54) **BRENNKRAFTMASCHINE MIT OPTIMIERTER SEKUNDÄRLUFTPUMPE**
INTERNAL COMBUSTION ENGINE WITH OPTIMIZED SECONDARY AIR PUMP
MOTEUR À COMBUSTION INTERNE DOTÉ DE POMPE À AIR SECONDAIRE OPTIMISÉE

(30) Priorität: 09.10.2019 DE 102019215452
(43) Veröffentlichungstag der Anmeldung: 17.08.2022
(73) Patentinhaber: Robert Bosch GmbH, 70442 Stuttgart (DE)
(72) Erfinder: BAEUERLE, Michael, 71735 Eberdingen (DE)
(86) Internationale Anmeldenummer: PCT/EP2020/077280
(87) Internationale Veröffentlichungsnummer: WO 2021/069265

(56) Entgegenhaltungen:
- WO-A1-2017/041949
- DE-A1- 4 402 137
- DE-B- 1 300 128

## Beschreibung

### Stand der Technik

Die vorliegende Erfindung betrifft eine Brennkraftmaschine, welche ein Sekundärluftsystem mit optimierter Sekundärluftpumpe aufweist.

Bei einem Kaltstart benötigt ein Ottomotor üblicherweise ein "fettes Gemisch", das heißt, ein Kraftstoff-Luft-Gemisch mit Kraftstoffüberschuss. Dadurch entstehen in der Kaltstartphase große Mengen an Kohlenmonoxid und unverbrannten Kohlenwasserstoffen. Da der Katalysator in dieser Phase seine Betriebstemperatur noch nicht erreicht hat, können diese schädlichen Abgasbestandteile ohne Nachbehandlung in die Umwelt entweichen. Um dies zu vermeiden und die Schadstoffe während der Kaltstartphase zu reduzieren, wird mit Hilfe eines Sekundärluftsystems sauerstoffreiche Umgebungsluft in das Abgassystem vor dem Katalysator eingeblasen. Dadurch kommt es zu einer Nachoxidation der Schadstoffe zu unschädlichem Kohlendioxid und Wasser. Die dabei entstehende Wärme heizt zusätzlich den Katalysator auf und verkürzt die Zeit bis zum Einsetzen der Lambdaregelung. Üblicherweise wird die Sekundärluft hierbei mittels eines Radialverdichters gefördert. Da die Druckspitzen der aus dem Brennraum ausströmenden Abgaspulse Versorgungsdrücke derartiger Radialverdichter jedoch deutlich übersteigen, kann die Sekundärluft nur sequenziell, das heißt zwischen den Abgaspulsen, eingeblasen werden.

Eine Vorrichtung zum Zuführen von Luft zu den Abgasen von Verbrennungsmotoren mittels einer Membranpumpe ist aus der DE 1 300 128 B bekannt. Eine Membranpumpe ist aus der WO 2017/041949 A1 bekannt.

### Offenbarung der Erfindung

Die erfindungsgemäße Brennkraftmaschine mit den Merkmalen des Anspruchs 1 bietet den Vorteil einer sehr effektiven Sekundärlufteinblasung welche sich durch einen besonders niedrigen Energiebedarf bei hoher Heizleistung, um einen Katalysator schnell aufzuheizen, auszeichnet. Dies wird erfindungsgemäß erreicht durch eine Brennkraftmaschine, die ein Primärluftsystem und ein Sekundärluftsystem umfasst. Das Primärluftsystem stellt Frischluft, insbesondere für die Verbrennung in einem Brennraum der Brennkraftmaschine, bereit. Das Sekundärluftsystem ist eingerichtet, um Sekundärluft von dem Primärluftsystem abzuzweigen. Vorzugsweise umfasst das Primärluftsystem einen Luftfilter, wobei das Sekundärluftsystem mit dem Luftfilter verbunden ist, um von diesem die Sekundärluft abzuzweigen. Besonders bevorzugt handelt es sich bei der Brennkraftmaschine um einen Ottomotor, welcher einen Katalysator zur Abgasnachbehandlung aufweist. Das Sekundärluftsystem ist dabei vorzugsweise für einen Kaltstart der Brennkraftmaschine vorgesehen, um eine Nachoxidation von im Abgassystem vorhandenen unverbrannten Kohlenwasserstoffen, die bei beim Kaltstart entstehen, stromauf des Katalysators zu bewirken. Dadurch kann die Menge an schädlichen Abgasbestandteilen beim Kaltstart reduziert werden, vor allem indem der Katalysator durch die bei der Nachoxidation entstehende Wärme besonders schnell auf Betriebstemperatur aufgeheizt wird.

Weiterhin umfasst die erfindungsgemäße Brennkraftmaschine eine Sekundärluftpumpe, welche die Sekundärluft fördert. Die Sekundärluftpumpe umfasst dabei einen Pumpraum, eine Membran und einen elektrisch betätigbaren Aktuator, welcher mit der Membran verbunden ist. Der Aktuator ist eingerichtet die Membran zu betätigen. Die Membran ist innerhalb des Pumpraums angeordnet und unterteilt den Pumpraum, insbesondere gasdicht, in einen Sekundärluftraum und in einen Abgasraum. Vorzugsweise ist die Membran eine Edelstahlmembran. Durch Betätigung der Membran wird die Sekundärluft in den Sekundärluftraum eingesogen und anschließend aus diesem ausgestoßen. Zudem umfasst die Sekundärluftpumpe eine Abgasleitung, welche den Abgasraum mit dem Abgaskanal der Brennkraftmaschine verbindet, wodurch Abgase beim Betrieb der Brennkraftmaschine in den Abgasraum ein und ausströmen können. Insbesondere führen die pulsartig aus dem Brennraum ausströmenden Abgase damit zu einer instationären Betätigung der Membran. Diese Betätigung der Membran führt wiederum zu einer pulsierenden Sekundärluftströmung. In anderen Worten ist die Sekundärluftpumpe somit als abgasbetriebene Membranpumpe mit zusätzlich unterstützender elektrischer Betätigung ausgebildet. Dadurch stellt die Abgasströmung, die aus dem Brennraum der Brennkraftmaschine austritt, mittels der Sekundärluftpumpe Pumpenergie bereit, welche genutzt wird, um die Sekundärluft zu fördern. Der Aktuator dient dabei einer zusätzlich unterstützenden Betätigung der Membran, um das Fördern der Sekundärluft gezielt verstärken zu können, das heißt um vorzugsweise einen Volumenstrom und/oder einen Druck in der Sekundärluftströmung zu erhöhen. Durch die instationäre Betätigung mittels der Abgasströmung erzeugt die Membran der Sekundärluftpumpe dabei automatisch eine entsprechend instationäre Sekundärluftströmung, welche insbesondere optimal an die Abgaspulse angepasst in die Abgasströmung eingeblasen werden kann.

Somit bietet die Brennkraftmaschine mit der Sekundärluftpumpe eine sehr einfache und zuverlässige Konstruktion, welche mit niedrigem Energieaufwand eine pulsierende und auf die Abgasströmung angepasste Sekundärluftströmung erzeugen kann. Dadurch können insbesondere hohe Drücke im Sekundärluftsystem erreicht werden, wodurch eine kontinuierliche Sekundärlufteinblasung beim Betrieb der Brennkraftmaschine möglich ist. Somit kann eine wesentlich homogenere Nachreaktion der Abgase erreicht werden, um direkt niedrige Schadstoffkonzentrationen im Abgas zu erhalten und zudem um durch die dabei entstehende Wärme eine hohe Heizleistung zum Aufheizen des Katalysators zu erzielen. Die Trennung des Pumpraums in Sekundärluftraum und Abgasraum durch die Membran bringt zusätzlich den Vorteil einer Rückschlagfunktion im Sekundärluftsystem, da durch die Membran insbesondere ein abgeschlossenes Volumen für die Abgase definiert ist. Dadurch wird beispielsweise verhindert, dass nach einem Abschalten der Sekundärlufteinblasung ein Rückstrom der Abgase durch das Sekundärluftsystem möglich ist.

Die Unteransprüche zeigen bevorzugte Weiterbildungen der Erfindung.

Bevorzugt weist der Sekundärluftraum ein Einlassventil und ein Auslassventil auf. Das Einlassventil ist dabei mit einer vom Primärluftsystem abzweigenden ersten Sekundärluftleitung verbunden. Das Auslassventil ist mit einer in den Abgaskanal mündenden zweiten Sekundärluftleitung verbunden. Besonders bevorzugt ist das Einlassventil und/oder das Auslassventil ein Rückschlagventil, um eine besonders einfache und zuverlässige Konstruktion der Sekundärluftpumpe zu erzielen. Alternativ kann das Einlassventil und/oder das Auslassventil als steuerbares Ventil ausgebildet sein.

Vorzugsweise sind die Abgasleitung und die zweite Sekundärluftleitung so dimensioniert, dass jeweils ein Abgaspuls der Brennkraftmaschine die Membran derart betätigt, dass die Membran einen zum nachfolgenden Abgaspuls synchronen Sekundärluftpuls erzeugt. Das heißt, die Leitungen, besonders bevorzugt Leitungslängen und/oder Leitungsquerschnitte, sind so ausgelegt, dass jeder Abgaspuls einen Sekundärluftpuls im Sekundärluftraum erzeugt, wobei der jeweilige Sekundärluftpuls relativ zu dem erzeugenden Abgaspuls um eine Abgaspuls-Phase versetzt in den Abgaskanal eingeleitet wird. Somit trifft gleichzeitig mit dem nachfolgenden Abgaspuls der erzeugte Sekundärluftpuls an der Mündung der zweiten Sekundärluftleitung in den Abgaskanal ein. Dadurch ergibt sich eine besonders günstige Auslegung des Sekundärluftsystems, sodass eine optimal auf die Abgasströmung abgestimmte pulsierende Sekundärlufteinblasung erfolgt. Insbesondere erfolgt durch die spezielle Dimensionierung beispielsweise eine passive Synchronisierung der Sekundärluftpulse mit den Abgaspulsen.

Besonders bevorzugt ist die Abgasleitung in Durchströmungsrichtung des Abgaskanals stromauf der zweiten Sekundärluftleitung mit dem Abgaskanal verbunden. Das heißt, eine Entnahmestelle der Strömungsenergie der Abgasströmung liegt stromauf einer Einblasestelle für die Sekundärluft. Hierdurch kann eine besonders strömungsgünstige Konstruktion des Sekundärluftsystems ermöglicht werden, wobei insbesondere durch eine weit stromauf, und insbesondere möglichst nahe am Brennraum, liegende Verbindung von Abgasleitung und Abgaskanal eine maximale Strömungsenergie der Abgasströmung genutzt werden kann.

Weiter bevorzugt umfasst die Brennkraftmaschine eine Steuereinrichtung, welche eingerichtet ist, eine Pulsationsfrequenz einer Abgasströmung der Brennkraftmaschine zu erfassen. Ferner ist die Steuereinrichtung eingerichtet, den Aktuator basierend auf der Pulsationsfrequenz anzusteuern. Vorteilhafterweise erfolgt die Ansteuerung dabei so, dass jeweils ein Sekundärluftpuls und ein Abgaspuls an einer Mündung der zweiten Sekundärluftleitung in den Abgaskanal aufeinandertreffen, um eine maximale Effektivität der Sekundärlufteinblasung zu erhalten.

Vorzugsweise umfasst die Brennkraftmaschine ferner eine Steuereinrichtung, wobei der Aktuator zudem einen Schwinganker-Antrieb umfasst, und wobei die Steuereinrichtung eingerichtet ist, den Schwinganker-Antrieb zu betätigen. Der Schwinganker-Antrieb bietet eine besonders einfache, kostengünstige und robuste Möglichkeit, um die Membran, insbesondere periodisch, zu betätigen. Weiterhin ist es vorteilhaft, wenn der elektrisch betätigbare Aktuator einen Kondensator mit variabler Kapazität umfasst. Die Steuereinrichtung ist dabei eingerichtet, die Kapazität des Kondensators zu verändern, um eine Resonanzfrequenz des Schwingkreises des Schwinganker-Antriebs an eine Pulsationsfrequenz einer Abgasströmung der Brennkraftmaschine anzupassen. Hierdurch ist bei besonders niedrigem Energiebedarf eine Einblasung eines hohen Volumenstroms an Sekundärluft möglich.

Erfindungsgemäß umfasst die Brennkraftmaschine einen ersten Zylinder und einen zweiten Zylinder und jeweils eine Sekundärluftpumpe pro Zylinder. Das heißt, es erfolgt jeweils eine Sekundärlufteinblasung in einen ersten Abgaskanal des ersten Zylinders sowie in einem zweiten Abgaskanal des zweiten Zylinders, um somit zylinderindividuell eine optimale Sekundärlufteinblasung zu erhalten. Vorzugsweise können die beiden Abgaskanäle stromab der jeweiligen Stellen zur Sekundärlufteinblasung zusammengeführt werden, beispielsweise mittels eines Y-Rohres, wobei stromab ein einziger Katalysator der Brennkraftmaschine angeordnet ist.

Erfindungsgemäß ist ein erster Abgasraum einer ersten Sekundärluftpumpe mit dem ersten Abgaskanal des ersten Zylinders verbunden und ein zweiter Abgasraum einer zweiten Sekundärluftpumpe ist mit einem zweiten Abgaskanal des zweiten Zylinders verbunden. Dabei ist die erste Sekundärluftpumpe eingerichtet, Sekundärluft in den zweiten Abgaskanal einzublasen, und die zweite Sekundärluftpumpe ist eingerichtet, Sekundärluft in den ersten Abgaskanal einzublasen. Das heißt, dadurch ist der erste Sekundärluftraum der ersten Sekundärluftpumpe mit dem zweiten Abgaskanal verbunden, und ein zweiter Sekundärluftraum der zweiten Sekundärluftpumpe ist mit dem ersten Abgaskanal verbunden. In anderen Worten sind die Sekundärlufteinblasungen über Kreuz angeordnet, sodass jeweils die Abgasenergie einer aus dem Zylinder ausströmenden Abgasströmung für die Sekundärlufteinblasung des jeweils anderen Zylinders genutzt wird. Bevorzugt kann bei mehr als zwei Zylindern ebenfalls eine Anordnung über Kreuz erfolgen, sodass immer die zur Sekundärlufteinblasung vorgesehene Sekundärluftpumpe jedes Zylinders zumindest teilweise von der aus einem anderen Zylinder ausströmenden Abgasströmung angetrieben wird.

Besonders bevorzugt ist die erste Sekundärluftpumpe eingerichtet, zu den Abgaspulsen des zweiten Zylinders synchrone Sekundärluftpulse zu erzeugen. Zudem ist die zweite Sekundärluftpumpe dabei eingerichtet, zu den Abgaspulsen des ersten Zylinders synchrone Sekundärluftpulse zu erzeugen. Vorzugsweise sind hierfür sämtliche Leitungslängen so aufeinander abgestimmt, dass an jeder Mündungsstelle der von der Sekundärluftpumpe wegführenden zweiten Sekundärluftleitung in den Abgaskanal jeweils synchron Abgaspulse und Sekundärluftpulse aufeinandertreffen. Dadurch wird auf besonders einfache Art und Weise durch eine passive Konstruktion des Sekundärluftsystems eine optimale Vermischung von Abgasen und Sekundärluft erreicht, was zu einer sehr hohen Effektivität des Sekundärluftsystems führt.

Vorzugsweise umfasst die Brennkraftmaschine mehrere Zylinder und einen Abgas-Sammler, in welchen sämtliche Abgaskanäle aller Zylinder münden. Beispielsweise kann der Abgas-Sammler als gemeinsames Rail mit im Vergleich zu den Abgaskanälen großem Volumen oder alternativ als Y-Rohr ausgebildet sein. Nicht erfindungsgemäß umfasst die Brennkraftmaschine ferner genau eine Sekundärluftpumpe. Vorzugsweise ist der Abgas-Sammler dabei mit dem Abgasraum der Sekundärluftpumpe verbunden, sodass die im Abgas-Sammler zusammengeführte Abgasströmung zur Betätigung der Membran verwendet wird. Alternativ kann bevorzugt der Sekundärluftraum der Sekundärluftpumpe mit dem Abgas-Sammler verbunden sein sodass die Sekundärluft in den Abgas-Sammler eingeblasen wird. Beispielsweise kann in diesem Fall besonders bevorzugt jeder Abgaskanal, insbesondere stromauf des Abgas-Sammlers, der mehreren Zylinder mit dem Abgasraum der Sekundärluftpumpe verbunden sein. Durch eine im Abgas-Sammler, welcher die Abgaskanäle bündelt, sowie durch nur eine einzige Sekundärluftpumpe ist eine besonders einfache und kostengünstige Konstruktion der Brennkraftmaschine mit wenigen Bauteilen möglich.

### Kurze Beschreibung der Zeichnungen

Nachfolgend werden Ausführungsbeispiele der Erfindung unter Bezugnahme auf die begleitende Zeichnung im Detail beschrieben. Gleiche bzw. funktional gleiche Bauteile sind stets mit denselben Bezugszeichen versehen. In der Zeichnung ist:
- Figur 1: eine stark vereinfachte schematische Ansicht einer Brennkraftmaschine gemäß einem ersten Ausführungsbeispiel der Erfindung,
- Figur 2: ein Detail der Figur 1,
- Figur 3: eine stark vereinfachte schematische Ansicht einer Brennkraftmaschine gemäß einem zweiten Ausführungsbeispiel der Erfindung, und
- Figur 4: eine stark vereinfachte schematische Ansicht einer

Brennkraftmaschine gemäß einem nicht erfindungsgemäßen Beispiel.

### Ausführungsformen der Erfindung

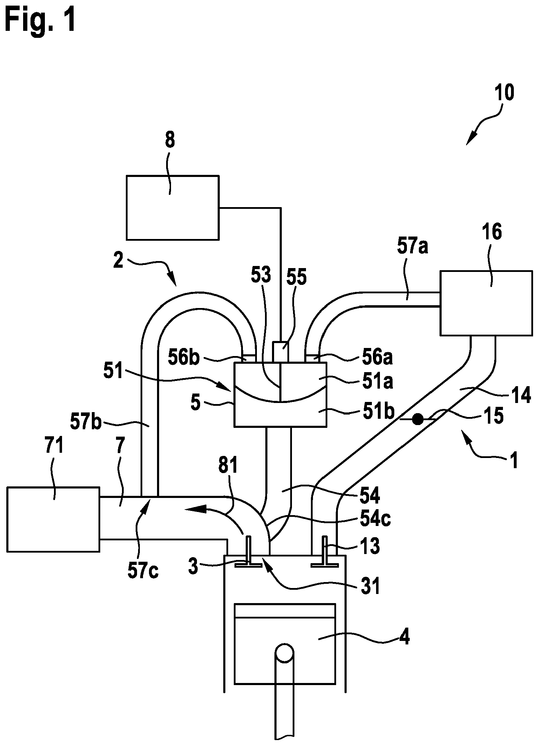

Die Figur 1 zeigt eine stark vereinfachte schematische Ansicht einer Brennkraftmaschine 10 gemäß einem ersten Ausführungsbeispiel der Erfindung.

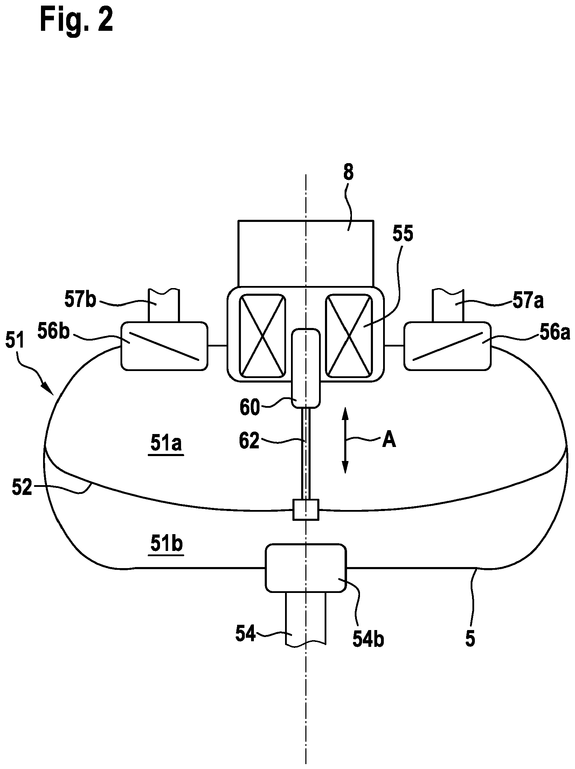

Figur 2 zeigt ein Detail der Figur 1, in welchem eine Sekundärluftpumpe 5 detaillierter dargestellt ist.

Die Brennkraftmaschine 10 umfasst ein Primärluftsystem 1, um einem Brennraum 4 Frischluft bereitzustellen. Das Primärluftsystem 1 weist einen Luftfilter 16 auf, von welchem die Frischluft über einen Primärluftkanal 14 zum Brennraum 4 geleitet wird und dort an einem Einlassventil 13 in den Brennraum 4 eingelassen wird. Im Primärluftkanal 14 ist zudem eine Drosselklappe 15 zur Regulierung der Frischluftmenge vorgesehen.

Weiter umfasst die Brennkraftmaschine 10 einen Abgaskanal 7, welcher an einem Auslassventil 3 vom Brennraum 4 wegführt, um Abgase aus dem Brennraum 4 abzuleiten. Das Auslassventil 3 kann dabei eine Durchlassöffnung 31 am Brennraum 4 freigeben und verschließen, um das Ausströmen der Abgase aus dem Brennraum 4 freizugeben bzw. zu verhindern. Im Abgaskanal 7 ist ein Katalysator 71 vorgesehen.

Um während einer Kaltstartphase der Brennkraftmaschine 10 eine Nachreaktion unverbrannter Kohlenwasserstoffe, zur Reduktion schädlicher Abgasbestandteile sowie zum möglichst schnellen Aufheizen des Katalysators 71, zu ermöglichen, umfasst die Brennkraftmaschine 10 weiterhin ein Sekundärluftsystem 2. Das Sekundärluftsystem 2 zweigt beim Kaltstart Sekundärluft vom Primärluftsystem 1 ab und leitet die Sekundärluft in den Abgaskanal 7. Dabei wird die Sekundärluft bezüglich einer Durchströmungsrichtung 81 des Abgaskanals 7 stromauf des Katalysators 71 in den Abgaskanal 7 eingeblasen.

Das Sekundärluftsystem 2 umfasst eine Sekundärluftpumpe 5, um die Sekundärluft zu fördern. Die Sekundärluftpumpe 5 ist dabei als Membranpumpe ausgebildet und umfasst eine Membran 52, welche einen Pumpraum 51 in einen Sekundärluftraum 51a und in einen Abgasraum 51b unterteilt. Am Sekundärluftraum 51a sind ein Einlassventil 56a und ein Auslassventil 56b vorgesehen. Das Einlassventil 56a ist mit einer ersten Sekundärluftleitung 57a, welche vom Luftfilter 16 des Primärluftsystems 1 abzweigt, verbunden. Das Auslassventil 56b ist mit einer zweiten Sekundärluftleitung 57b verbunden, welche an einer Mündung 57c in den Abgaskanal 7 mündet. Die Ventile 56a, 56b können als Rückschlagventil ausgebildet sein. Alternativ können auch gesteuerte Ventile verwendet werden.

Durch Betätigung der Membran 52 wird Sekundärluft vom Einlassventil 56a zum Auslassventil 56b gefördert. Diese Betätigung der Membran 52 wird einerseits durch die Abgasströmung der Brennkraftmaschine 10, sowie zusätzlich unterstützend durch einen elektrisch betätigbaren Aktuator 53 erzielt. Für die abgasgetriebene Betätigung ist der Abgasraum 51b der Sekundärluftpumpe 5 mittels einer Abgasleitung 54 mit dem Abgaskanal 7 der Brennkraftmaschine 10 verbunden. Die Abgasleitung 54 zweigt dabei an einer Abzweigung 54c vom Abgaskanal 7 ab und ist mittels eines Abgasleitungsanschlusses 54b an den Abgasraum 51b angeschlossen.

Beim Öffnen des Auslassventils 3 bewirkt die pulsartig ausströmende Abgasströmung somit, dass mittels der Membran 51 pro austretendem Abgaspuls jeweils ein Sekundärluftpuls im Sekundärluftraum 51a erzeugt wird.

Der so erzeugte Sekundärluftpuls weist dabei einen deutlich höheren Druck auf, beispielsweise im Vergleich zu einer mittels einem Radialverdichter erzeugten kontinuierlichen Sekundärluftströmung.

Die Leitungslängen und Leitungsquerschnitte jeweils der Abgasleitung 54, der ersten Sekundärluftleitung 57b sowie des Abgaskanals zwischen der entsprechenden Abzweigung 54c und Mündung 57c sind dabei speziell so ausgelegt, dass jeweils ein aus dem Brennraum 4 austretender Abgaspuls über die Membran 52 im Sekundärluftraum 51a einen Sekundärluftpuls erzeugt. Dieser Sekundärluftpuls wird dann aufgrund der angepassten Leitungsdimensionen synchron zum nachfolgenden Abgaspuls eingeblasen. Das heißt, der erzeugte Sekundärluftpuls und der nachfolgende Abgaspuls treffen gleichzeitig an der Mündung 57c ein. Dadurch wird eine optimal auf die Abgasströmung abgestimmte pulsierende Sekundärluftströmung erzeugt, welche stromab der Mündung 57c eine besonders gleichmäßig mit Sekundärluft durchmischte Abgasströmung erzielt. Dadurch kann beim Kaltstart an dieser Stelle eine besonders effektive Nachreaktion der Abgase erreicht werden. Hierdurch werden einerseits die Schadstoffkonzentrationen im Abgas direkt reduziert und andererseits durch die dabei entstehende Wärme der Katalysator 71 in sehr kurzer Zeit auf seine Betriebstemperatur aufgeheizt.

Der Aktuator 53 bewirkt dabei eine zusätzliche Unterstützung bei der Betätigung der Membran 52. Vorzugsweise kann mittels des Aktuators 53 eine Amplitude, welche den durch die Sekundärluftpumpe 5 geförderten Volumenstrom an Sekundärluft bestimmt, angepasst werden. Der Aktuator 52 wird dabei von einer Steuereinrichtung 8 angesteuert.

Die Steuereinrichtung 8 ist zusätzlich eingerichtet, eine Pulsationsfrequenz der Abgasströmung zu erfassen, und den Aktuator 53 entsprechend mit der Pulsationsfrequenz anzusteuern, um eine besonders präzise auf die Abgasströmung angepasste Sekundärluftströmung zu erhalten. Hierfür umfasst der Aktuator 53 einen Schwinganker-Antrieb 55, welcher in der Figur 2 detaillierter dargestellt ist.

Der Schwinganker-Antrieb 55 weist einen permanentmagnetischen Anker 60 auf, welcher einen elektromagnetischen Schwingkreis mit einer Spule und einem Kondensator mit variabler Kapazität aufweist. Somit kann durch Bestromung des Schwingkreises, welche über die Steuereinrichtung 8 gesteuert wird, eine Bewegung des Ankers 60 erzeugt werden. Der Anker 60 ist über eine Stange 62 mit der Membran 52 verbunden. Somit kann durch entsprechende Bestromung des Schwingkreises und/oder durch Änderung der Kapazität des Kondensators auch eine Resonanzfrequenz der Anordnung aus Schwinganker-Antrieb 55 und Membran 52 variabel verändert werden. Dabei kann eine sehr feinfühlige Einstellung der Resonanzfrequenz erreicht werden. Die Resonanzfrequenz der Anordnung wird bevorzugt in Abhängigkeit einer Zündfrequenz bestimmt. Alternativ oder zusätzlich wird auch eine Drehzahl der Brennkraftmaschine 10 von der Steuereinrichtung 8 ermittelt und zur Bestimmung der Resonanzfrequenz der Membran 52 verwendet. Hierbei kann beispielsweise eine Ermittlung der Drehzahl mittels eines Kurbelwellensensors erfolgen, welcher üblicherweise bei Brennkraftmaschinen vorhanden ist. Dadurch sind keine zusätzlichen Bauteile zur Ermittlung der Drehzahl notwendig. Basierend auf der Drehzahl ist die Steuereinrichtung 8 dann eingerichtet, eine Bestromung des Schwingkreises durchzuführen. Vorzugsweise ist die Steuereinrichtung 8 derart eingerichtet ist, dass im Betrieb die Membran 52 möglichst immer in oder nahe einer Resonanzfrequenz betreibbar ist. Dadurch ist eine Energieaufnahme über die Membran 52 am größten, so dass der Abgasstoß zur Verdichtung der Sekundärluft im Sekundärluftraum 51a optimal genutzt werden kann. Weiterhin ist es auch möglich, dass die Spule des Schwingkreises dauerbestromt wird und eine zyklische Bestromung einer Dauerbestromung überlagert wird, um die Resonanzfrequenz der Membran 52 zu ändern.

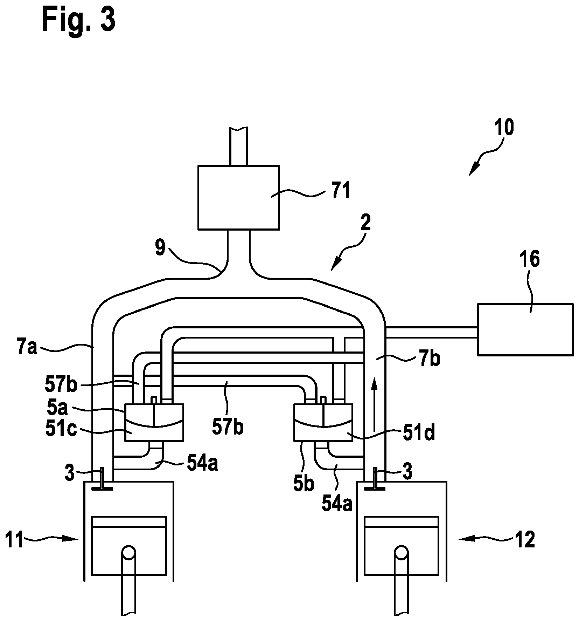

Die Figur 3 zeigt eine stark vereinfachte schematische Ansicht einer Brennkraftmaschine 10 gemäß einem zweiten Ausführungsbeispiel der Erfindung. Die Brennkraftmaschine 10 des zweiten Ausführungsbeispiels umfasst einen ersten Zylinder 11 und einen zweiten Zylinder 12. Pro Zylinder 11, 12 ist jeweils eine Sekundärluftpumpe 5a, 5b vorgesehen. Beide Sekundärluftpumpen 5a, 5b sind mit dem Luftfilter 16 verbunden. Der erste Abgasraum 51c der ersten Sekundärluftpumpe 5a ist dabei mit dem ersten Abgaskanal 7a des ersten Zylinders 11 verbunden. Analog ist der zweite Abgasraum 51d der zweiten Sekundärluftpumpe 5b mit dem zweiten Abgaskanal 7b des zweiten Zylinders 12 verbunden. Die zweiten Sekundärluftleitungen 57b, welche die Sekundärluft von den Sekundärluftpumpen 5a, 5b zu den Abgaskanälen 7a, 7b leiten, sind über Kreuz angeordnet. Das heißt, die erste Sekundärluftpumpe 5a bläst Sekundärluft in den zweiten Abgaskanal 7b ein, und die zweite Sekundärluftpumpe 5b bläst Sekundärluft in den ersten Abgaskanal 7a ein. Hierdurch kann auf besonders einfache Art und Weise eine zu den Abgaspulsen synchrone gepulste Sekundärlufteinblasung erfolgen, insbesondere wenn die beiden Zylinder 11, 12 gegeneinander versetzt, beispielsweise um zwei Takte versetzt, betrieben werden.

Stromab den Stellen der Sekundärlufteinblasung werden die beiden Abgaskanäle 7a, 7b in einen gemeinsamen Abgas-Sammler 9 zusammengeführt, wobei der einzige Katalysator 71 stromab von dem Abgas-Sammler 9 angeordnet ist.

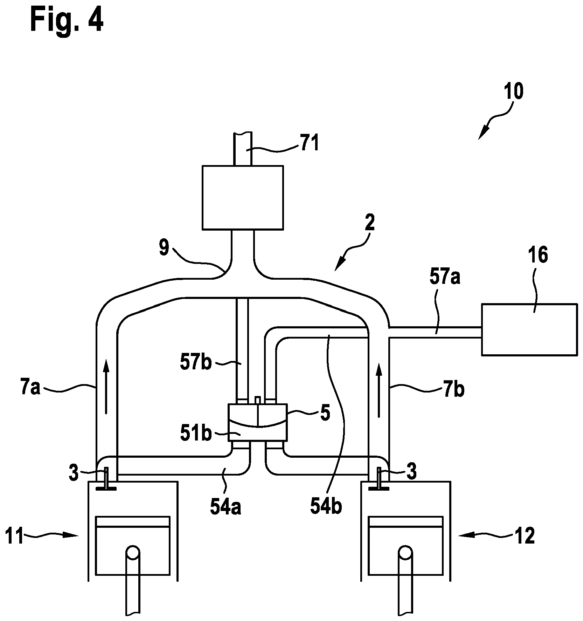

Die Figur 4 zeigt eine stark vereinfachte schematische Ansicht einer Brennkraftmaschine 10 gemäß eines nicht erfindungsgemäßen Beispiels.

Die Brennkraftmaschine 10 umfasst ebenfalls zwei Zylinder 11, 12, wobei im Unterschied zum zweiten Ausführungsbeispiel nur eine einzige Sekundärluftpumpe 5 vorgesehen ist. Am Abgasraum 51b sind dabei zwei Einlässe vorgesehen, welche mit dem ersten Abgaskanal 7a des ersten Zylinders 11 bzw. mit dem zweiten Abgaskanal 7b des zweiten Zylinders 12 verbunden sind. Der Sekundärluftraum 51a ist außerdem mit dem Abgas-Sammler 9 verbunden. Das heißt, die zweite Sekundärluftleitung mündet in den Abgas-Sammler 9. Hierdurch erfolgt die Sekundärlufteinblasung im zweiten Ausführungsbeispiel zentral an einer Stelle. Durch eine solche zentrale Sekundärlufteinblasung ergibt sich somit eine besonders einfache und kostengünstige Konstruktion des Sekundärluftsystems 2 mit wenigen Bauteilen.

## Patentansprüche

1. Brennkraftmaschine, umfassend:
ein Primärluftsystem (1), zur Bereitstellung von Frischluft, und ein Sekundärluftsystem (2), welches eingerichtet ist, Sekundärluft von dem Primärluftsystem (1) abzuzweigen und in einen Abgaskanal (7) einzublasen, wobei das Sekundärluftsystem (2) eine Sekundärluftpumpe (5) aufweist, zum Fördern der Sekundärluft,
wobei die Sekundärluftpumpe (5) umfasst:
- einen Pumpraum (51),
- eine Membran (52), welche im Pumpraum (51) angeordnet ist, und den Pumpraum (51) in einen Sekundärluftraum (51a) und einen Abgasraum (51b) unterteilt,
- eine Abgasleitung (54), welche den Abgasraum (51b) mit dem Abgaskanal(7) der Brennkraftmaschine (10) verbindet,
**dadurch gekennzeichnet,**
**dass** die Sekundärluftpumpe (5) weiterhin umfasst:
- einen elektrisch betätigbaren Aktuator (53), welcher mit der Membran (52) verbunden ist, und welcher eingerichtet ist, die Membran (52) zu betätigen, und
**dass** die Brennkraftmaschine weiterhin umfasst:
einen ersten Zylinder (11) und einen zweiten Zylinder (12) und jeweils eine Sekundärluftpumpe (5a, 5b) pro Zylinder (11, 12),
- wobei ein erster Abgasraum (51c) einer ersten Sekundärluftpumpe (5a) mit einem ersten Abgaskanal (7a) des ersten Zylinders (11) verbunden ist,
- wobei ein zweiter Abgasraum (51d) einer zweiten Sekundärluftpumpe (5b) mit einem zweiten Abgaskanal (7b) des zweiten Zylinders (12) verbunden ist,
- wobei die erste Sekundärluftpumpe (5a) eingerichtet ist, Sekundärluft in den zweiten Abgaskanal (7b) einzublasen, und
- wobei die zweite Sekundärluftpumpe (5b) eingerichtet ist, Sekundärluft in den ersten Abgaskanal (7a) einzublasen.

2. Brennkraftmaschine nach Anspruch 1, wobei der Sekundärluftraum (51a) ein Einlassventil (56a) und ein Auslassventil (56b) aufweist, wobei das Einlassventil (56a) mit einer vom Primärluftsystem (1) abzweigenden ersten Sekundärluftleitung (57a) verbunden ist, und wobei das Auslassventil (56b) mit einer in den Abgaskanal (7) mündenden zweiten Sekundärluftleitung (57b) verbunden ist.

3. Brennkraftmaschine nach Anspruch 2, wobei die Abgasleitung (54) und die zweite Sekundärluftleitung (57b) so dimensioniert sind, dass jeweils ein Abgaspuls der Brennkraftmaschine (10) die Membran (52) derart betätigt, um einen zum jeweils nachfolgenden Abgaspuls synchronen Sekundärluftpuls im Sekundärluftraum (51a) zu erzeugen, sodass der Sekundärluftpuls gleichzeitig mit dem nachfolgenden Abgaspuls an einer Mündung (57c) der zweiten Sekundärluftleitung (57b) in den Abgaskanal (7) eintrifft.

4. Brennkraftmaschine nach einem der vorhergehenden Ansprüche, wobei die Abgasleitung (7) in Durchströmungsrichtung (81) des Abgaskanals (7) stromauf der zweiten Sekundärluftleitung (57b) mit dem Abgaskanal (7) verbunden ist.

5. Brennkraftmaschine nach einem der vorhergehenden Ansprüche, ferner umfassend eine Steuereinrichtung (8), wobei die Steuereinrichtung (8) eingerichtet ist, eine Pulsationsfrequenz einer Abgasströmung der Brennkraftmaschine (10) zu erfassen, und eingerichtet ist, den Aktuator (53) basierend auf der Pulsationsfrequenz anzusteuern.

6. Brennkraftmaschine nach einem der Ansprüche 1 bis 4, ferner umfassend eine Steuereinrichtung (8), wobei der Aktuator (53) einen Schwinganker-Antrieb (55) umfasst, und wobei die Steuereinrichtung (53) eingerichtet ist, den Schwinganker-Antrieb (55) zu betätigen.

7. Brennkraftmaschine nach Anspruch 6, wobei der Aktuator (53) einen Kondensator mit variabler Kapazität umfasst, und wobei die Steuereinrichtung (8) eingerichtet ist, die Kapazität des Kondensators zu verändern, zum Anpassen einer Resonanzfrequenz des Schwingkreises an eine Pulsationsfrequenz einer Abgasströmung der Brennkraftmaschine (10).

8. Brennkraftmaschine nach einem der vorhergehenden Ansprüche, wobei die erste Sekundärluftpumpe (5a) eingerichtet ist, zu den Abgaspulsen des zweiten Zylinders (12) synchrone Sekundärluftpulse zu erzeugen, und wobei die zweite Sekundärluftpumpe (5b) eingerichtet ist, zu den Abgaspulsen des ersten Zylinders (11) synchrone Sekundärluftpulse zu erzeugen.

## Claims

1. Internal combustion engine, comprising:
a primary air system (1) for providing fresh air, and a secondary air system (2) which is configured to branch off secondary air from the primary air system (1) and to blow it into an exhaust gas duct (7), wherein the secondary air system (2) has a secondary air pump (5) for conveying the secondary air,
wherein the secondary air pump (5) comprises:
- a pump chamber (51),
- a diaphragm (52), which is arranged in the pump chamber (51) and subdivides the pump chamber (51) into a secondary air chamber (51a) and an exhaust gas chamber (51b),
- an exhaust gas line (54), which connects the exhaust gas chamber (51b) to the exhaust gas duct (7) of the internal combustion engine (10),
**characterized in that**
the secondary air pump (5) further comprises:
- an electrically actuatable actuator (53), which is connected to the diaphragm (52) and which is configured to actuate the diaphragm (52), and
**in that** the internal combustion engine further comprises: a first cylinder (11) and a second cylinder (12) and a respective secondary air pump (5a, 5b) per cylinder (11, 12),
- wherein a first exhaust gas chamber (51c) of a first secondary air pump (5a) is connected to a first exhaust gas duct (7a) of the first cylinder (11),
- wherein a second exhaust gas chamber (51d) of a second secondary air pump (5b) is connected to a second exhaust gas duct (7b) of the second cylinder (12),
- wherein the first secondary air pump (5a) is configured to blow secondary air into the second exhaust gas duct (7b), and
- wherein the second secondary air pump (5b) is configured to blow secondary air into the first exhaust gas duct (7a).

2. Internal combustion engine according to Claim 1, wherein the secondary air chamber (51a) has an inlet valve (56a) and an outlet valve (56b), wherein the inlet valve (56a) is connected to a first secondary air line (57a) branching off from the primary air system (1), and wherein the outlet valve (56b) is connected to a second secondary air line (57b) opening into the exhaust gas duct (7).

3. Internal combustion engine according to Claim 2, wherein the exhaust gas line (54) and the second secondary air line (57b) are dimensioned such that in each case an exhaust gas pulse from the internal combustion engine (10) actuates the diaphragm (52) in such a way as to produce a secondary air pulse that is synchronous with the respective following exhaust gas pulse in the secondary air chamber (51a), so that the secondary air pulse arrives at an opening (57c) of the second secondary air line (57b) into the exhaust gas duct (7) at the same time as the following exhaust gas pulse.

4. Internal combustion engine according to one of the preceding claims, wherein, in the flow direction (81) of the exhaust gas duct (7), the exhaust gas line (7) is connected to the exhaust gas duct (7) upstream of the second secondary air line (57b).

5. Internal combustion engine according to one of the preceding claims, further comprising a control device (8), wherein the control device (8) is configured to measure a pulsation frequency of an exhaust gas flow from the internal combustion engine (10), and is configured to activate the actuator (53) on the basis of the pulsation frequency.

6. Internal combustion engine according to one of Claims 1 to 4, further comprising a control device (8), wherein the actuator (53) comprises an oscillating armature drive (55), and wherein the control device (53) is configured to actuate the oscillating armature drive (55) .

7. Internal combustion engine according to Claim 6, wherein the actuator (53) comprises a capacitor with a variable capacitance, and wherein the control device (8) is configured to change the capacitance of the capacitor to adapt a resonant frequency of the tuned circuit to a pulsation frequency of an exhaust gas flow from the internal combustion engine (10).

8. Internal combustion engine according to one of the preceding claims, wherein the first secondary air pump (5a) is configured to produce secondary air pulses that are synchronous with the exhaust gas pulses from the second cylinder (12), and wherein the second secondary air pump (5b) is configured to produce secondary air pulses that are synchronous with the exhaust gas pulses from the first cylinder (11).

## Revendications

1. Moteur à combustion interne, comprenant :
un système d'air primaire (1) destiné à fournir de l'air frais, et un système d'air secondaire (2) qui est conçu pour détourner l'air secondaire du système d'air primaire (1) et l'insuffler dans un conduit de gaz d'échappement (7), le système d'air secondaire (2) comportant une pompe à air secondaire (5) destinée à transporter l'air secondaire,
la pompe à air secondaire (5) comprenant :
- une chambre de pompage (51),
- une membrane (52) qui est disposée dans la chambre de pompage (51) et qui divise la chambre de pompage (51) en une chambre d'air secondaire (51a) et une chambre de gaz d'échappement (51b),
- une conduite de gaz d'échappement (54) qui relie la chambre de gaz d'échappement (51b) au conduit de gaz d'échappement (7) du moteur à combustion interne (10), **caractérisé en ce que**
la pompe à air secondaire (5) comprend en outre :
- un actionneur électriquement actionnable (53) qui est relié à la membrane (52) et qui est conçu pour actionner la membrane (52), et
le moteur à combustion interne comprend en outre :
un premier cylindre (11) et un deuxième cylindre (12) et une pompe à air secondaire (5a, 5b) par cylindre (11, 12),
- une première chambre de gaz d'échappement (51c) d'une première pompe à air secondaire (5a) étant reliée à un premier conduit de gaz d'échappement (7a) du premier cylindre (11),
- une deuxième chambre de gaz d'échappement (51d) d'une deuxième pompe à air secondaire (5b) étant reliée à un deuxième conduit de gaz d'échappement (7b) du deuxième cylindre (12),
- la première pompe à air secondaire (5a) étant conçue pour insuffler de l'air secondaire dans le deuxième conduit de gaz d'échappement (7b), et
- la deuxième pompe à air secondaire (5b) étant conçue pour insuffler de l'air secondaire dans le premier conduit de gaz d'échappement (7a).

2. Moteur à combustion interne selon la revendication 1, la chambre à air secondaire (51a) comportant une soupape d'admission (56a) et une soupape de sortie (56b), la soupape d'admission (56a) étant reliée à une première conduite d'air secondaire (57a) dérivant du système d'air primaire (1), et la soupape de sortie (56b) étant reliée à une deuxième conduite d'air secondaire (57b) qui débouche dans le conduit de gaz d'échappement (7).

3. Moteur à combustion interne selon la revendication 2, la conduite de gaz d'échappement (54) et la deuxième conduite d'air secondaire (57b) étant dimensionnées de manière à ce que chaque impulsion de gaz d'échappement du moteur à combustion interne (10) actionne la membrane (52) de manière à générer dans la chambre à air secondaire (51a) une impulsion d'air secondaire qui est synchrone avec l'impulsion de gaz d'échappement respectivement suivante de sorte que l'impulsion d'air secondaire arrive dans le conduit de gaz d'échappement (7) en même temps que l'impulsion de gaz d'échappement suivante au niveau d'une embouchure (57c) de la deuxième conduite d'air secondaire (57b).

4. Moteur à combustion interne selon l'une des revendications précédentes, la conduite de gaz d'échappement (7) étant reliée au conduit de gaz d'échappement (7) en amont de la deuxième conduite d'air secondaire (57b) dans le sens d'écoulement (81) du conduit de gaz d'échappement (7).

5. Moteur à combustion interne selon l'une des revendications précédentes, comprenant en outre un dispositif de commande (8), le dispositif de commande (8) étant conçu pour détecter une fréquence de pulsation d'un flux de gaz d'échappement du moteur à combustion interne (10) et conçu pour activer l'actionneur (53) sur la base de la fréquence de pulsation.

6. Moteur à combustion interne selon l'une des revendications 1 à 4, comprenant en outre un dispositif de commande (8), l'actionneur (53) comprenant un entraînement à induit oscillant (55), et le dispositif de commande (53) étant conçu pour actionner l'entraînement à induit oscillant (55).

7. Moteur à combustion interne selon la revendication 6, l'actionneur (53) comprenant un condensateur à capacité variable, et le dispositif de commande (8) étant conçu pour modifier la capacité du condensateur afin d'adapter une fréquence de résonance du circuit résonnant à une fréquence de pulsation d'un flux de gaz d'échappement du moteur à combustion interne (10).

8. Moteur à combustion interne selon l'une des revendications précédentes, la première pompe à air secondaire (5a) étant conçue pour générer des impulsions d'air secondaire synchrones avec les impulsions de gaz d'échappement du deuxième cylindre (12), et la deuxième pompe à air secondaire (5b) étant conçue pour générer des impulsions d'air secondaire synchrones avec les impulsions de gaz d'échappement du premier cylindre (11).
